# EUROPEAN PATENT SPECIFICATION

(11) **EP 4 419 734 B1**
(45) Date of publication and mention of the grant of the patent: **25.02.2026**
(21) Application number: 22808605.4
(22) Date of filing: 11.10.2022
(51) Int. Cl.: C25B 1/04, C25B 9/05, C25B 15/00, C25B 15/023, C25B 15/08

(54) **PRESSURISED ELECTROLYSER**
DRUCKELEKTROLYSEUR
ÉLECTROLYSEUR SOUS PRESSION

(30) Priority: 20.10.2021 GB 202115054
(43) Date of publication of application: 28.08.2024
(73) Proprietor: Geary, Paul Francis, Nottingham NG4 2HD (GB)
(72) Inventor: Geary, Paul Francis, Nottingham NG4 2HD (GB)
(74) Representative: Harner-Foreman, Frank Jakob
(86) International application number: PCT/EP2022/078247
(87) International publication number: WO 2023/066723

(56) References cited:
- EP-B2- 0 656 959
- WO-A1-94/05830
- WO-A2-2013/066331
- CN-B- 111 712 593
- DE-A1- 3 837 354
- US-A1- 2015 292 094
- US-A1- 2021 040 627

## Description

### BACKGROUND OF THE INVENTION

The present disclosure relates to an electrolyser, particularly but not exclusively, for generating hydrogen. Another aspect of the present disclosure relates to a method of controlling an electrolyser.

The process of using electricity to decompose water into oxygen and hydrogen gas is known as electrolysis of water. Hydrogen gas produced in this way can be used in various applications and has become widely known as an energy dense option for fuelling vehicles. In other applications, electrolysis of water may be used as a decentralised storage solution storing electrical energy as chemical energy, particularly electrical energy obtained via renewable power. In recent years, therefore, demand for hydrogen, inter alia, as a fuel for so called hydrogen fuel cells has increased rapidly.

Electrolysers can be grouped into proton exchange membrane (PEM) electrolysers, alkaline electrolysers and solid oxide electrolysers. These different types of electrolysers function in slightly different ways depending on the electrolyte material involved. Yet, some of the most prominent drawbacks of most electrolysers include overall inefficiencies and/or failure to supply hydrogen gas at pressures required for further use. US 2021/040627 A1 discloses a pressurized water electrolyser comprising an anode and a cathode separated by a proton exchange membrane, with liquid electrolyte and porous electrodes. WO 94/05830 A1 discloses an electrochemical cell using porous electrodes and adapted for the electrolysis of water under pressure. WO 2013/066331 A2 relates to an electrochemical reactor comprising porous structures and flow channels for the transport of gas and liquid.

It is an aim of the present disclosure to solve or at least ameliorate one or more problems of the prior art.

### SUMMARY OF THE INVENTION

Aspects and embodiments of the present disclosure provide an electrolyser for generating hydrogen and a method of controlling an electrolyser for generating hydrogen from water as claimed in the appended claims.

According to a first aspect of the present disclosure, there is provided an electrolyser according to claim 1.

According to one embodiment, the control unit is configured to:
receive gas-pressure-data representative of a gas pressure within the first collection chamber;
determine, on the basis of the gas-pressure-data, a desired electrolyte water pressure within the electrolyte chamber,
control the electrolyte supply circuit to set the pressure within the electrolyte chamber to the desired electrolyte pressure.

In another embodiment, the control unit is configured to set the desired electrolyte pressure to be higher than a gas pressure within the first gas collection chamber, wherein a difference between the electrolyte pressure and the gas pressure is above a selectable first pressure-threshold.

In another embodiment, the control unit is configured to apply a current across the electrodes if the pressure difference between the first gas collection chamber and the electrolyte chamber is above the selectable pressure-threshold.

In another embodiment, the first gas collection chamber comprises a pressure control valve for regulating a gas pressure within the first gas collection chamber.

In another embodiment, the electrolyte supply circuit comprises a hydraulic pump for supply of electrolyte water to the electrolyte chamber, and wherein the control unit is configured to:
receive electrolyte-pressure-data representative of a pressure of electrolyte water within the electrolyte chamber; and
control, on the basis of the electrolyte-pressure-data, an operation of the pump.

In another embodiment, both electrodes are permeable to gases produced by the decomposition of electrolyte water, and wherein the electrodes have different porosities.

In another embodiment, the at least one permeable electrode is made of steel, preferably sintered steel.

In another embodiment, the two electrodes are made from different materials.

In another embodiment, at least one of the electrodes, preferably the cathode, is magnetic.

In another embodiment, the electrolyte supply circuit comprises a pressure storage reservoir selectively connectable to the electrolyte chamber.

In another embodiment, the pressure storage reservoir is connected to the electrolyte chamber via a normally-open outlet valve, which is closed during normal operation of the electrolyser.

In another embodiment, the control unit is configured to:
receive a forward-flushing command;
interrupt any current applied across the electrodes and increase a pressure in the electrolyte chamber to be more than 5 bar above a gas pressure within the first gas chamber in response to the forward-flushing command.

In another embodiment, the at least one permeable electrode comprises a thickness between its first and second surface of 3mm to 100mm.

In another embodiment, the electrolyte chamber comprises an electrolyte gap located between the two electrodes, wherein the gap preferably has a width of 0.1mm to 10mm.

In another embodiment, the first gas collection chamber comprises a first drain port for draining electrolyte water that has passed through the at least one permeable electrode back into the electrolyte supply circuit.

In another embodiment, the control unit is configured to:
receive a backward -flushing -command;
interrupt any current applied across the electrodes and supply electrolyte water to the first gas collection chamber via the first drain port to reverse flush the at least one permeable electrode from the first gas collection chamber towards the electrolyte chamber.

According to another embodiment aspect of the present disclosure, there is provided a method of controlling an electrolyser for generating hydrogen from water, the electrolyser comprising two electrodes for decomposition of electrolyte water, at least one of the electrodes being permeable to gases produced by the decomposition of electrolyte water, the method comprising:
supplying electrolyte water to the at least one electrode;
controlling a pressure drop between opposite sides of the at least one electrode.

According to an embodiment, the method comprises maintaining a pressure drop between opposite sides of the at least one electrode that is higher than a selectable pressure-threshold.

According to an embodiment, the method comprises applying electricity across the electrodes if the pressure drop across opposite sides of the at least one electrode is higher than the selectable pressure-threshold.

The selectable pressure threshold is 5 bar or more.

According to a first aspect of the present disclosure, there is provided an electrolyser for generating hydrogen, the electrolyser comprising:
a housing comprising an electrolyte chamber;
two electrodes for decomposition of electrolyte water, at least one of the electrodes being permeable to gases produced by the decomposition of electrolyte water, wherein the at least one permeable electrode has a first surface facing the electrolyte chamber and a second surface facing a first gas collection chamber, wherein the at least one permeable electrode has a porosity of 0.3 µm or less.

### BRIEF DESCRIPTION OF THE DRAWINGS

The aforementioned and other features and advantages of this disclosure, and the manner of attaining them, will become more apparent and the disclosure will be better understood by reference to the following description of embodiments of the disclosure taken in conjunction with the accompanying drawings, wherein:
Figure 1 shows a schematic cross-section of an electrolyser according to an embodiment of the present disclosure;
Figure 2 shows a schematic flow chart of a method according to an embodiment of the present disclosure.

Corresponding reference characters indicate corresponding parts throughout the several views.

### DETAILED DESCRIPTION

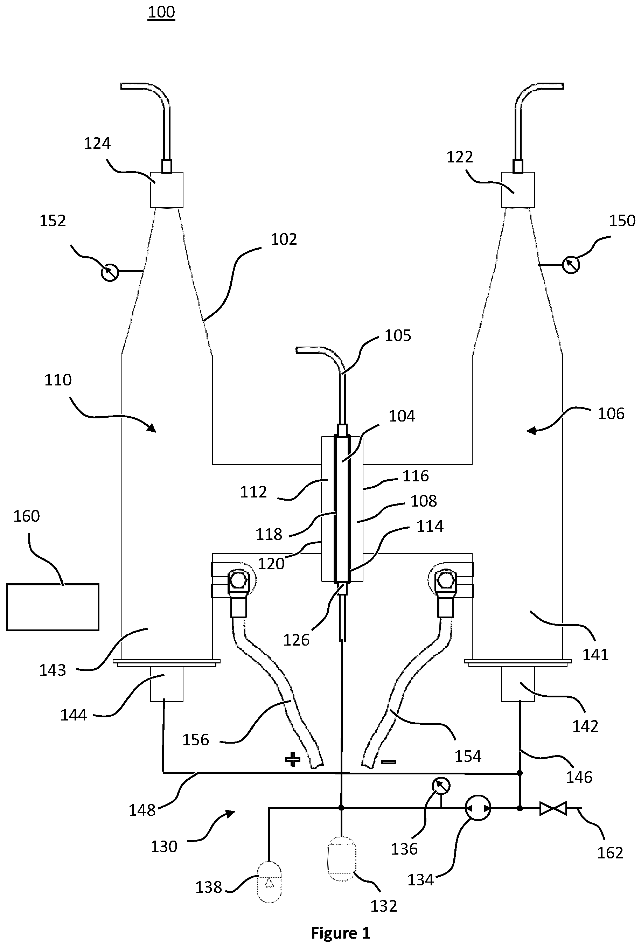

FIG. 1 shows an electrolyser 100 according to an embodiment of the present disclosure. In the example of FIG. 1, there is shown an electrolyser 100 for generating hydrogen, particularly by electrolysis of water. However, as will be appreciated, the electrolyser 100 shown in FIG. 1 may also be suitable for decomposition of other substances by means of electrolysis. Generally, in this specification, the term "electrolyte water" may encompass water including any type of electrolyte, such as sulphuric acid, sulphate, potassium hydroxide, sodium hydroxide, etc., or in some embodiments water without electrolytes such as tritiated water.

The electrolyser 100 comprises a housing 102. The housing 102 comprises an electrolyte chamber 104. In one example, the electrolyte chamber is configured to hold electrolyte water under pressure as will be described in more detail below. The electrolyte water may comprise any electrolyte dissolved in water that aids decomposition of water.

The housing 102 comprises a first gas collection chamber 106. The first gas collection chamber 106 is separated from the electrolyte chamber 104 by a first electrode 108. The housing 102 comprises a second gas collection chamber 110. The second gas collection chamber 110 is separated from the electrolyte chamber 104 by a second electrode 112. The electrolyte chamber 104 is located between the first and second electrodes 108, 112. The electrolyte chamber 104 is a membrane-less chamber.

It will be appreciated that in some embodiments, the electrolyser may comprise more than two electrodes, e.g. arranged in parallel to each other to form a stack of electrodes. The pair of electrodes 108, 112 of Figure 1 are thus exemplary for any number of electrodes used in a stack.

The housing 102 of Figure 1 is a multi-part housing. I n particular, the housing 102 comprises at least two parts: a first housing part includes the first gas collection chamber 106 and the first electrode 108; a second housing part includes the second gas collection chamber 110 and the second electrode 112. The at least two housing parts are connected to each other such that a gap is formed between first surfaces 114, 118 of the first and second electrodes 108, 112. This gap defines the electrolyte chamber 104, which is thus arranged between the electrodes 108, 112. In the example of Figure 1, the housing 102 is substantially H-shaped as will be described in more detail below. However as will be appreciated, other designs may include a plurality of plate shaped electrodes that typically are flat and similar in construction to a plate heat-exchanger.

The first electrode 108 is permeable to gases produced by decomposition of electrolyte water. The first electrode 108 is also generally permeable to electrolyte water depending on a pressure within the electrolyte chamber 104 as will be explained in more detail below. In other words, the first electrode 108 is a so-called "flow-through" electrode in which gases produced by decomposition of electrolyte water (and the electrolyte water) within the electrolyte chamber 104 are able to penetrate the first electrode 108 and thus move from the electrolyte chamber 104 towards the first gas collection chamber 106. To this end, the first electrode 108 is a permeable electrode including a plurality of pores sized to allow permeation of the respective gas, e.g. hydrogen, through the first electrode 108.

The first electrode 108 has a first surface 114 facing the electrolyte chamber and a second, opposite surface 116 facing the first gas collection chamber 106.

The first electrode 108 may be made of steel, preferably sintered steel. In some embodiments, the second electrode 112 may also be made of steel, preferably sintered steel. In alternative embodiments, the second electrode 112 may be made of a material different to the first electrode 108.

Gases produced by the first electrode 108 may flow into the first gas collection chamber 106. The first gas collection chamber 106 comprises a first gas outlet port 122 for extraction of the gas within the first gas collection chamber 106. As will be described in more detail below, the first gas outlet port 122 may include a pressure control valve, such as a pressure relief valve, configured to set a gas pressure within the first gas collection chamber 106.

The second electrode 112 of Figure 1 is also permeable to gases produced by the decomposition of electrolyte water. The second electrode 112 is also generally permeable to electrolyte water depending on a pressure within the electrolyte chamber 104 as will be explained in more detail below. In other words, the second electrode 112 is also a "flow-through" electrode in which gases produced by decomposition of electrolyte water within the electrolyte chamber 104 are able to penetrate the second electrode 112 and thus move from the electrolyte chamber 104 towards the second gas collection chamber 110.

The second electrode 112 has a first surface 118 facing the electrolyte chamber 104 and a second, opposite surface 120 facing the second gas collection chamber 110.

Gases produced by the second electrode 112 may flow into the second gas collection chamber 110. The second gas collection chamber 110 comprises a second gas outlet port 124 for extraction of the gas within the second gas collection chamber 110. As will be described in more detail below, the second gas outlet port 124 may include a pressure control valve, such as a pressure relief valve, configured to determine the pressure within the second gas collection chamber 110.

The electrolyser 100 comprises an electrolyte water supply circuit 130 for supplying the electrolyte chamber 104 with electrolyte water. The electrolyte water supply circuit 130 of Figure 1 is a closed system. Alternatively, the water supply circuit may be an open system including an electrolyte water reservoir. I n one example, the electrolyte water supply circuit 130 comprises a pump 134 arranged upstream of an inlet port 126 of the electrolyte chamber 104. The pump 134 may be configured to move electrolyte water through the system and in the direction of the electrolyte chamber 104 at a selectable pressure.

The electrolyte supply circuit 130 comprises an electrolyte water supply line 162 for topping up electrolyte water turned into gas by the electrolysis process. As indicated in Figure 1, the electrolyte water supply line 162 may be connected to the pump 134 via a manually or automatically controlled shut off valve. An expansion vessel 132 is a pressure storage device arranged within the electrolyte water supply circuit 130 and configured to provide expansion derived pressure into the system and configured to enable 134 to have a lower cycle time and maintain a desired pressure range within the circuit 130/protect the circuit 130 from excessive pressures.

The electrolyte chamber 104 comprises a vent port connected to a vent line 105. The vent line 105 is configured to be used to drain the back flushed electrolyte and any associated media. Additionally, the line may be instrumental in sampling and even comprise a collection well for removal of electrolyte in the circulation system either with or without pressure. Additionally, the vent may or may not be instrumental in the purging of air from the system prior to current being applied to the electrodes. Finally, the vent pipe may allow electrolyte flow and recycling from 104 via 105 to 162, the water inlet line or it may discharged/collected.

The electrolyte supply circuit 130 may comprise a pressure gauge 134 for monitoring the pressure within the electrolyte chamber 104. As will be appreciated, the pressure gauge 136 may be arranged anywhere downstream of the pump 134. In some embodiments, the pressure gauge 136 may be an integral part of the pump 134. In other embodiments, the pressure gauge may be arranged within the electrolyte chamber 104.

In some embodiments, the electrolyte water supply circuit 130 may comprise a pressure storage device, such as an accumulator 138. The accumulator 138 shown in FIG. 1 is arranged downstream of the pump 134. The accumulator 138 may be connected to the pump 134 via a check valve, which, during normal operation of the electrolyser 100, allows fluid to be pumped into the accumulator 138. As will be appreciated, the check valve will stop fluid from leaving the accumulator 138. The accumulator 138 may also comprise a separate outlet valve for selectively connecting an outlet of the accumulator 138 with the electrolyte chamber 104. In some embodiments, the accumulator 138 may thus comprise a normally-open outlet valve, which is closed during normal operation of the electrolyser. In other words, during normal operation, pressurized electrolyte water may be pumped into the accumulator 138 but may not leave the accumulator 138, until the outlet valve is opened. As will be described in more

detail below, using a normally-open outlet valve enables the accumulator 138 to be used as a safety measure, e.g. during power cuts.

The first gas collection chamber 106 comprises a first drain port 142. The second gas collection chamber 110 comprises a second drain port 144. The first drain port 142 is connected to the pump 134 of the electrolyte water supply circuit 130 via a first drain line 146. The second drain port 144 is connected to the pump 134 via a second drain line 148. Electrolyte water permeating the first electrode 108 during operation of the electrolyser 100 may be drained from the first gas collection chamber 106 via the first drain port 142 and the first drain line 146 respectively. Similarly, electrolyte water permeating the second electrode 112 during operation of the electrolyser 100 may be drained from the second gas collection chamber 110 via the second drain port 144 and the second drain line 148 respectively. In multicell arrangements any drain port can act for one or more of the cells rather than being required by each cell.

In the embodiment of Figure 1, the first and second drain ports 142, 144 are arranged typically at a bottom end of the first and second gas collection chambers 106, 110. In other words, the drain ports 142, 144 are arranged below the first and second gas outlet ports 122, 124 of the first and second gas collection chambers 106, 110 and below the first and second electrodes 108, 112. In other words, both the first and the second gas collection chambers 106, 110 comprise drain wells 141, 143 arranged typically at a bottom end of the gas collection chambers 106, 110. As can be seen from Figure 1, the housing 102 is thus substantially H-shaped but does not need to be, it can be multicell or arranged similar to a plate heat exchanger design. The device can be made of multiple electrodes usually arranged in parallel to each other to form a stack of electrodes.

During operation of the electrolyser 100, electrolyte water that has permeated the first or second electrode 108, 112 will collect within the drain well 141, 143 at the bottom of the respective gas collection chambers 106, 110, whereas the gases produced during the electrolysis, will rise and pressurize the gas collection chambers 106, 110.

As long as the drain ports 142, 144 are covered with electrolyte water, the drain ports may be opened for drainage of the electrolyte water from the gas collection chambers 106, 110 without inadvertently removing gases via the drain ports 142, 144. In some embodiments, the electrolyser 100 may comprise electrolyte water level sensors arranged within the gas collection chambers 106, 110 to determine if sufficient levels of electrolyte water are available within the gas chambers 106, 110 in order to safely open one or both of the drain ports 142, 144. These levels may or may not be actively controlled with active movement of electrolyte water to the collection chambers from areas of the electrolyte circulation system with capacity including 138 or as active top up from external water source. The levels may or may not be controlled using active pressure variation and control within the system.

The first and second gas collection chambers 106, 110 both comprise gas pressure gauges 150, 152. A first gas pressure gauge 150 is configured to determine the gas pressure within the first gas collection chamber 106. A second gas pressure gauge 152 is configured to determine a second gas pressure within the second gas collection chamber 110. I n some embodiments, the first and second gas gauges may be incorporated into a single device.

The electrolyser 100 comprises a first electrical terminal 154 and a second electrical terminal 156. In the example of Figure 1, the first terminal 154 is a negative terminal, whereas the second terminal 156 is a positive terminal. However, it will be appreciated that the polarity of the first and second terminals may be swapped, such that the first terminal 154 is a positive terminal and the second terminal 156 is negative. This is because, in some embodiments, the electrolyser is symmetrical on either side of the electrolyte chamber 104.

The terminals 154, 156 are connected to the housing 102 of the electrolyser 100. In particular, the first terminal 154 is connected to the first gas collection chamber 106. The second terminal is connected to the second gas collection chamber 110. Accordingly, the first terminal 154 is electrically connected to the first electrode 108, which is electrically connected to the first gas collection chamber 106 via its second surface 116. The second terminal 156 is connected to the second gas collection chamber 110, which in turn is connected to the second electrode 112 via the second surface 120 of the second electrode 112. Of course, it will be appreciated that the terminals 154, 156 may also be connected to the electrodes 108, 112 directly, rather than via the housing 102 of the electrolyser 100.

The terminals 154, 156 are connectable to a power source, e.g. a direct current power source, to apply a current across the electrodes 108, 112. If the terminals 154, 156 are connected to the power source, current will flow between the first and second electrode 108, 112 via the electrolyte water within the electrolyte chamber 104, thereby activating the electrolysis process for decomposition and separation of electrolyte water into oxygen and hydrogen, as will be explained in more detail below.

As mentioned above, in the embodiment of Figure 1, the first terminal 154 is a negative terminal and the second terminal 156 is a positive terminal. Accordingly, the first electrode 108 of the embodiment in Figure 1 is the cathode of the electrolyser 100, whereas the second electrode 112 is the anode of the electrolyser 100. The first electrode 108 is permeable to gas, particularly hydrogen. The second electrode 112 is permeable to gas, particularly oxygen.

In one example, the first and second electrodes 108, 112 comprise different porosities. In some embodiments, the porosity of the first electrode 108 may be about half of the second electrode112. The first electrode 108 may have a porosity below 0.3µm. The second electrode 112 may have a porosity below 0.6µm.

In the above example, the first gas collection chamber 106 is configured to receive hydrogen gas, whereas the second gas collection chamber 110 is configured to receive oxygen gas.

In some embodiments, the anode, i.e. the second electrode 112 in Figure 1, may be magnetic. Magnetism of the anode may improve formation of oxygen in and on the second electrode 112. To this end, the second electrode 112 may be formed as a permanent mag net. Alternatively, the second electrode may be formed as an electric magnet, activated when an electric current is applied across the two electrodes 108, 112 during operation of the electrolyser 100.

The electrolyser 100 further comprises a control unit 160, schematically represented in Figure 1. The control unit may be connected to the first and/or second gas pressure gauges 150, 152 to receive gas-pressure-data representative of a gas pressure within the first and/or second gas collection chamber 106, 110.

The control unit 160 may be connected to the first and second drain valves 142, 144 for controlling operation of the first and second drain valves 142, 144. The control unit may be connected to the first and second gas outlet ports 122, 124 for controlling the operation of the first and second gas outlet ports 122, 124.The control unit 160 may be connected to the power source (not shown) for controlling the supply of electrical power to the first and second electrodes 108, 112. The control unit 160 may be connected to an outlet valve of the accumulator 138. The control unit 160 may be connected to the pump 134 and the electrolyte water pressure gauge 136.

The control unit may be connected to any of the above devices via control wires or wirelessly as is well known in the art. The control unit may either be locally arranged together with the housing 102 of the electrolyser or remotely, e.g. in a centralised control office.

The control unit 160 is configured to control a pressure drop across at least one of the permeable electrodes 108, 112. In one embodiment, the control unit 160 is configured to control the electrolyte pressure in the electrolyte chamber 104 relative to a gas pressure in the first or second gas collection chamber 106, 110. The control unit 160 may be configured to control the electrolyte water pressure in the electrolyte chamber 104 to be higher than a gas pressure in the first or second gas collection chambers 106, 110. In other words, the control unit 160 is configured to maintain a pressure drop between the electrolyte chamber 104 and the gas collection chambers 106, 110. The control unit 160 is configured to control the electrolyte water pressure in the electrolyte chamber 104 to be at least 5 bar higher than a gas pressure in the first and/or second gas collection chamber 106, 110.

Maintaining a pressure drop of at least 5 bar between the electrolyte chamber 104 and the first and/or second gas collection chamber 106, 110 causes electrolyte water to permeate the first electrode 108 and/or the second electrode 112 and thus to flow between the electrolyte chamber 104 and the first and/or second gas collection chamber 106, 110 together with the hydrogen gas produced at the first electrode.

Causing the above electrolyte water flow across the first and/or second electrodes 108, 112 significantly increases the efficiency of the electrolyser 100.

In order to maintain the required pressure drop across one or both of the electrodes 108, 112, the control unit 160 of Figure 1 is configured to receive gas - pressure-data representative of a gas pressure within the first or second gas collection chambers 106, 110 respectively. In the example of Figure 1, the gas- pressure-data may be pressure readings supplied by the first and/or second gas pressure gauges 150, 152.

On the basis of the gas-pressure-data, the control unit will determine a desired electrolyte water pressure within the electrolyte chamber 104. In some examples, the control unit may add a preselected amount of pressure to the gas pressure indicated by the gas-pressure-data in order to determine the desired electrolyte water pressure. In some embodiments, the control unit 160 may determine a desired electrolyte water pressure that is at least 5 bar higher than the gas pressure within the first gas collection chamber 106.

The control unit may then control the electrolyte water supply circuit 130 to supply electrolyte water to the electrolyte chamber 104 until the desired electrolyte water pressure is reached. In the example of Figure 1, the control unit may be configured to activate the pump 134 to supply electrolyte water to the control chamber 104 until the desired electrolyte water pressure has been reached. To this end, the control unit may receive electrolyte -pressure-data representative of a pressure of electrolyte water within the electrolyte chamber 104. In the embodiment of Figure 1, the electrolyte -pressure-data comprises pressure readings supplied by the pressure gauge 136 arranged downstream of the pump 134.

The control unit may control activation of the pump 134 via a control loop, based on electrolyte-pressure-data provided by the pressure gauge 136. For example, the control unit may control the electrolyte water pressure within the control chamber 104, represented by the pressure readings of the pressure gauge 136, via a PID control loop.

It should be appreciated that a pressure drop between the electrolyte chamber 104 and the gas collection chambers 106, 110 will vary continuously as the electrolyser 100 is operated. This is because, during operation of the electrolyser, i.e. when pressurised electrolyte water is available in the electrolyte chamber 104 and a current is applied across the two electrodes 108, 112, hydrogen and oxygen gases are produced and added to the first and second gas collection chambers 106, 110 continuously. Accordingly, in this example, as long as the first and second gas outlet ports 122, 124 remain closed, the gas pressure within the gas collection chambers 106, 110 will continue to rise. This exemplary rise in gas pressure will be determined by the control unit 160 on the basis of the gas-pressure-data. The control unit 160 will then determine a new, higher, desired electrolyte water pressure and control the pump 134 to increase the electrolyte water pressure within the electrolyte chamber 104 and match said increased desired electrolyte water pressure. The control unit 160 may continuously adju st the pressure within the electrolyte chamber 104 as long as the gas pressure within the first or second gas collection chamber 106, 110 rises.

The control unit 160 may also control the gas pressure within the first and/or second gas collection chamber 106, 110. In the example of Figure 1, the control unit may be configured to control an operation of the first and/or second gas outlet port 122, 124. The control unit 160 may open and close the first gas outlet port 122 to control the (hydrogen) gas pressure within the first gas collection chamber 106. The control unit 160 may open and close the second gas outlet port 124 to control the (oxygen) gas pressure within the second gas collection chamber 110. In some embodiments, the control unit 160 may receive a first desired gas pressure for the first gas collection chamber 106 and a second desired gas pressure for the second gas collection chamber 110. The first and second desired gas pressures may be selected by an operator. I n some examples, the desired gas pressures may be determined directly by apparatus using the hyd rogen and oxygen gases provided by the electrolyser 100.

In another embodiment, one or both of the gas outlet ports may comprise pressure relief valves configured to open automatically once the gas pressure in the first or second gas collection chamber 106, 110 exceeds a set pressure. In this example, the pressure within the gas collection chambers will be determined by the set pressure of the pressure relief valves of the first and second gas outlet ports 122, 124 respectively. In some embodiments, the set pressure of the pressure relief valves may be adjustable, e.g. via the control unit 160.

In both embodiments described above, the control unit 160 may be configured to maintain a gas pressure in the first and second gas collection chamber 106, 110 at 100bar to 1000bar. If the gas pressure within the gas collection chambers 106, 110 is maintained at 100 bar, the control unit may set a desired electrolyte water pressure of 105 bar or more to allow for some electrolyte water to pass through the first and/or second electrode 108, 112 as has been described above.

It should be noted that electrolyte water passing through the first and second electrodes 108, 112, due to the pressure drop between the electrolyte chamber 104 and the gas collection chambers 106, 110, may be drained back into the electrolyte water supply circuit 130, e.g. intermittently, via the above drain ports 142, 144. The control unit 160 may be configured to control such electrolyte water drainage operation. To this end, the control unit 160 may be connected to water level sensors (not shown) arranged within the first and/or second gas collection chambers 106, 110. The water level sensors may provide the control unit with water-level-data representative of the water levels within the first and second gas collection chambers 106, 110 particularly within the drain wells 141, 143. If, on the basis of the water-level-data, the control unit determines that the electrolyte water levels are sufficiently high to fully cover the first and/or second drain port 142, 144, the control unit 160 may temporarily open one or both of the drain ports 142, 144 to drain electrolyte water from the gas collection chambers 106, 110. In one embodiment, the control unit may be configured to open the drain ports 142, 144 for a predetermined amount of time, e.g. several seconds, if the water level has reached a water-level-threshold. I n other embodiments, the control unit will drain electrolyte water until the electrolyte water levels have fallen below a predetermined water-level-threshold.

The control unit may also be configured to control a power source (not shown) attached to the electrodes 108, 112 via the terminals154, 156. The operator or controller can alter the amperage according to the type of electrolysis and the type of electrode used and other variables such as cell gap. The control unit may be configured to set the voltage provided by the power source to be set at the desired voltage. The desired voltage may be designated by the operator. The amperage and voltage can be fixed, manually set or variably controlled by the control unit 160.

In some embodiments, the control unit may be configured to supply electrical power to the electrodes 108, 112 only once the desired pressure drop across the electrodes 108, 112 has been achieved. In other words, the control unit 160 may monitor a pressure difference between one of the gas collection chambers 106, 110 and the electrolyte chamber 104. Once the pressure difference exceeds a selectable first pressure-threshold, the control unit may activate the power supply to apply a DC current across the electrodes 108, 112 and the electrolyte water within the electrolyte chamber 104 to start operation of the electrolyser 100. The control unit 160 may be configured to de -activate the power supply whenever the pressure difference falls below a second pressure-threshold. The second pressure threshold may be the same as or lower than the first pressure-threshold.

As mentioned above, the accumulator 138 may be arranged such that, during normal operation, electrolyte water may only be added to the accumulator. In other words, pressurised electrolyte water may not leave the accumulator 138 during normal operation. The accumulator may comprise a normally-open outlet valve. The control unit 160 may be configured to maintain the normally-open outlet valve in a closed position during normal operation of the electrolyser. In case of a power cut, i.e. when the pump 136 and potentially the control unit 160 are inactive, the normally-open outlet valve of the accumulator will open such that the accumulator is connected to the electrolyte chamber 104.

Accordingly, the electrolyte water stored in the accumulator 138 will be able to flow into the electrolyte chamber to maintain the pressure drop across the first and second electrodes 108, 112 for a period of time, despite the power cut. In this scenario, no current is applied across the electrodes 108, 112 such that the electrolysis process will come to a stop and no further gases will be produced. Due to the elevated pressure maintained within the electrolyte chamber 104 by means of the accumulator 138, however, electrolyte water will be pushed through the two permeable electrodes 108, 112 despite the power cut. As a consequence, remaining gas bubbles formed during operation will be flushed out of the pores of the electrodes via the prolonged flow of electrolyte water after the operation of the electrolyser 100 has come to a stop.

The control unit 160 may be configured to perform a forward flushing operation for removing debris or bubbles that are stuck in the pores of the electrodes 108, 112. During the forward flushing operation, the control unit 160 may interrupt any current applied across the first and second electrodes 108, 112 and maintain the desired electrolyte water pressure within the electrolyte chamber 104. Due to the lack of electric current applied across the electrodes, no more hydrogen or oxygen bubbles will be produced at the electrodes 108, 112. Electrolyte water that is still being pumped through the electrodes 108, 112 will remove debris and remaining bubbles as it passes through the electrode's pores. During the forward flushing operation, the control unit may hold open the drain ports 142, 144.

In another embodiment, the control unit 160 may be configured to perform a backward flushing operation for removing debris or bubbles that are stuck in the pores of the electrodes 108, 112. During the backward flushing operation, the control unit may pump electrolyte water into the first and/or second gas collection chambers 106, 110 via their respective drain ports 142, 144. To this end, the pump 134 may be a bi-directional pump.

Electrolyte water pumped into the gas collection chambers 106, 110 via the drain lines 146, 148 and the drain ports 142, 144 will then permeate the electrodes 108, 112 from their second surfaces 116, 120 towards their first surfaces 114, 118 and into the electrolyte chamber 104. Contaminated flushing fluid (e.g. electrolyte water) may be removed from the electrolyte water supply circuit 130 via the vent line 105, during the reverse flushing operation. Flushed fluid may also be removed at or before the pump 134, i.e. between port 126 and pump 134. During the flushing operation, the control unit 160 may be configured to close the inlet port 126 and open an outlet port of the electrolyte chamber 104 that is connected to the vent line 105. Electrolyte water removed from the electrolyte supply circuit 130 may be replenished via the electrolyte water supply line 162.

The control unit may be configured to perform the forward or backward flushing operations automatically, i.e. at predetermined time intervals, or in response to an operator's command.

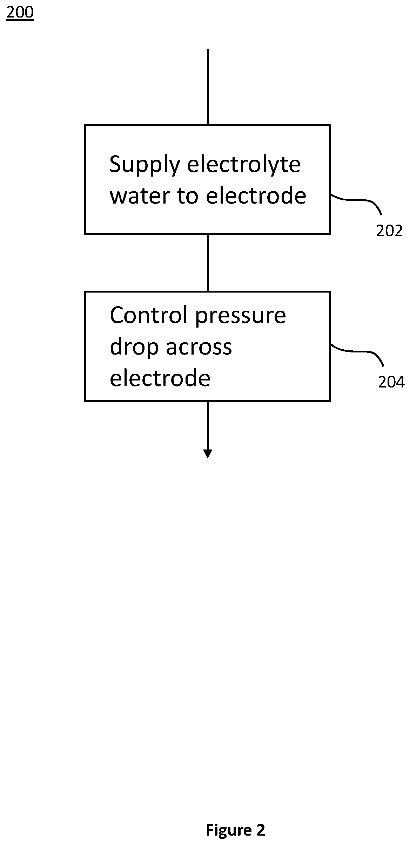

Turning to Figure 2, there is shown a schematic flow chart of an embodiment of a method 200 for controlling an electrolyser. The electrolyser may comprise two electrodes for decomposition of electrolyte water, at least one of the electrodes being permeable to gases produced by the decomposition of electrolyte water.

In a first step 202, the method comprises supplying electrolyte water to the at least one permeable electrode. In a second step 204, the method comprises controlling a pressure drop between opposite sides of the at least one permeable electrode. To this end, the method may either comprise increasing the electrolyte water pressure upstream of the permeable electrode or decreasing a gas pressure, e.g. hydrogen pressure, downstream of the at least one permeable electrode.

The pressure drop is 5 bar or more.

It will be appreciated that although, in the embodiments described above, a single control unit was mentioned for the control of various aspects of the electrolyser of the present disclosure, the electrolyser may also include a plurality of control units controlling some of the aforementioned aspects and, preferably, communicating with each other.

## Claims

1. An electrolyser (100) for generating hydrogen, the electrolyser (100) comprising:
- a housing (102) comprising an electrolyte chamber (104);
- two electrodes (108, 112) for decomposition of electrolyte water, at least one of the electrodes (108, 112) being permeable to gases produced by the decomposition of electrolyte water and electrolyte water within the electrolyte chamber (104), wherein the at least one permeable electrode has a first surface facing the electrolyte chamber (104) and a second surface facing a first gas collection chamber (106);
- an electrolyte supply circuit (130) for supplying electrolyte water to the electrolyte chamber (104); and
- a control unit (160) configured to control a pressure drop of at least 5 bar across the at least one permeable electrode, between the electrolyte chamber (104) and the first gas collection chamber (106).

2. The electrolyser (100) of Claim 1,
wherein the control unit (160) is configured to:
- receive gas-pressure-data representative of a gas pressure within the first collection chamber;
- determine, on the basis of the gas-pressure-data, a desired electrolyte water pressure within the electrolyte chamber (104),
- control the electrolyte supply circuit (130) to set the pressure within the electrolyte chamber (104) to the desired electrolyte pressure.

3. The electrolyser (100) of Claim 2,
wherein the control unit (160) is configured to set the desired electrolyte pressure to be higher than a gas pressure within the first gas collection chamber (106), wherein a difference between the electrolyte pressure and the gas pressure is above a selectable first pressure-threshold.

4. The electrolyser (100) of Claim 3,
wherein the control unit (160) is configured to apply a current across the electrodes (108, 112) if the pressure difference between the first gas collection chamber (106) and the electrolyte chamber (104) is above the selectable pressure-threshold.

5. The electrolyser (100) of any one of Claims 1 to 4,
wherein the electrolyser (100) comprises a pressure control valve for regulating a gas pressure within the first gas collection chamber (106).

6. The electrolyser (100) of any one of Claims 2 to 5,
wherein the electrolyte supply circuit (130) comprises a hydraulic pump (134) for supply of electrolyte water to the electrolyte chamber (104), and
wherein the control unit (160) is configured to:
- receive electrolyte-pressure-data representative of a pressure of electrolyte water within the electrolyte chamber (104); and
- control, on the basis of the electrolyte-pressure-data, an operation of the pump (134).

7. The electrolyser (100) of any one of Claims 1 to 6,
wherein the two electrodes (108, 112) are made from different materials.

8. The electrolyser (100) of any one of Claims 1 to 7,
wherein the electrolyte supply circuit (130) comprises a pressure storage reservoir selectively connectable to the electrolyte chamber (104),
wherein the pressure storage reservoir is preferably connected to the electrolyte chamber (104) via a normally-open outlet valve, which is closed during normal operation of the electrolyser (100).

9. The electrolyser (100) of any one of Claims 1 to 8,
comprising a control unit (160) configured to:
- receive a forward-flushing-command;
- interrupt any current applied across the electrodes (108, 112) and increase a pressure in the electrolyte chamber (104) to be more than 5 bar above a gas pressure within the first gas chamber in response to the forward - flushing command.

10. The electrolyser (100) of any one of Claims 1 to 9,
wherein the electrolyte chamber (104) comprises an electrolyte gap located between the two electrodes (108, 112), wherein the gap preferably has a width of 0.1mm to 10mm.

11. The electrolyser (100) of any one of Claims 1 to 10,
wherein the first gas collection chamber (106) comprises a first drain port (142) for draining electrolyte water that has passed through the at least one permeable electrode back into the electrolyte supply circuit.

12. The electrolyser (100) of Claim 11,
wherein the control unit (160) is configured to:
- receive a backward-flushing-command;
- interrupt any current applied across the electrodes (108, 112) and supply electrolyte water to the first gas collection chamber (106) via the first drain port (142) to reverse flush the at least one permeable electrode from the first gas collection chamber (106) towards the electrolyte chamber (104).

13. A method of controlling an electrolyser (100) for generating hydrogen from water, the electrolyser (100) comprising two electrodes (108, 112) for decomposition of electrolyte water, at least one of the electrodes (108, 112) being permeable to gases produced by the decomposition of electrolyte water and the electrolyte water , the method comprising:
- supplying electrolyte water to the at least one electrode;
- controlling a pressure drop of at least 5 bar between opposite sides of the at least one electrode.

14. The method of Claim 13, comprising:
- Applying electricity across the electrodes (108, 112) if the pressure drop across opposite sides of the at least one electrode is higher than the selectable pressure-threshold.

## Patentansprüche

1. Elektrolyseur (100) zum Erzeugen von Wasserstoff, der Elektrolyseur (100) Folgendes umfassend:
- ein Gehäuse (102), das eine Elektrolytkammer (104) umfasst;
- zwei Elektroden (108, 112) zur Zersetzung von Elektrolytwasser, wobei mindestens eine der Elektroden (108, 112) für Gase, die durch die Zersetzung von Elektrolytwasser erzeugt werden, und Elektrolytwasser innerhalb der Elektrolytkammer (104) durchlässig ist, wobei die mindestens eine durchlässige Elektrode eine erste Oberfläche, die der Elektrolytkammer (104) zugewandt ist, und eine zweite Oberfläche aufweist, die einer ersten Gassammelkammer (106) zugewandt ist;
- einen Elektrolytversorgungskreis (130) zum Zuführen von Elektrolytwasser zu der Elektrolytkammer (104); und
- eine Steuereinheit (160), die dazu ausgelegt ist, einen Druckabfall von mindestens 5 bar über die mindestens eine durchlässige Elektrode zwischen der Elektrolytkammer (104) und der ersten Gassammelkammer (106) zu steuern.

2. Elektrolyseur (100) nach Anspruch 1,
wobei die Steuereinheit (160) ausgelegt ist, um:
- Gasdruckdaten zu empfangen, die einen Gasdruck innerhalb der ersten Sammelkammer repräsentieren;
- auf der Grundlage der Gasdruckdaten einen gewünschten Elektrolytwasserdruck innerhalb der Elektrolytkammer (104) zu bestimmen,
- den Elektrolytversorgungskreis (130) zu steuern, um den Druck innerhalb der Elektrolytkammer (104) auf den gewünschten Elektrolytdruck einzustellen.

3. Elektrolyseur (100) nach Anspruch 2,
wobei die Steuereinheit (160) dazu ausgelegt ist, den gewünschten Elektrolytdruck so einzustellen, dass er höher ist als ein Gasdruck innerhalb der ersten Gassammelkammer (106), wobei eine Differenz zwischen dem Elektrolytdruck und dem Gasdruck über einer auswählbaren ersten Druckschwelle liegt.

4. Elektrolyseur (100) nach Anspruch 3,
wobei die Steuereinheit (160) dazu ausgelegt ist, einen Strom über die Elektroden (108, 112) anzulegen, wenn die Druckdifferenz zwischen der ersten Gassammelkammer (106) und der Elektrolytkammer (104) über der auswählbaren Druckschwelle liegt.

5. Elektrolyseur (100) nach einem der Ansprüche 1 bis 4,
wobei der Elektrolyseur (100) ein Drucksteuerventil zum Regeln eines Gasdrucks innerhalb der ersten Gassammelkammer (106) umfasst.

6. Elektrolyseur (100) nach einem der Ansprüche 2 bis 5,
wobei der Elektrolytversorgungskreis (130) eine Hydraulikpumpe (134) zum Zuführen von Elektrolytwasser zu der Elektrolytkammer (104) umfasst, und wobei die Steuereinheit (160) ausgelegt ist, um:
- Elektrolytdruckdaten zu empfangen, die einen Druck von Elektrolytwasser innerhalb der Elektrolytkammer (104) repräsentieren; und
- auf der Grundlage der Elektrolytdruckdaten einen Betrieb der Pumpe (134) zu steuern.

7. Elektrolyseur (100) nach einem der Ansprüche 1 bis 6,
wobei die zwei Elektroden (108, 112) aus unterschiedlichen Materialien hergestellt sind.

8. Elektrolyseur (100) nach einem der Ansprüche 1 bis 7,
wobei der Elektrolytversorgungskreis (130) ein Druckspeicherreservoir umfasst, das selektiv an die Elektrolytkammer (104) angeschlossen werden kann, wobei das Druckspeicherreservoir vorzugsweise über ein normalerweise offenes Auslassventil, das im Normalbetrieb des Elektrolyseurs (100) geschlossen ist, mit der Elektrolytkammer (104) verbunden ist.

9. Elektrolyseur (100) nach einem der Ansprüche 1 bis 8,
umfassend eine Steuereinheit (160), die ausgelegt ist, um:
- einen Vorwärts-Spülbefehl zu empfangen;
- als Reaktion auf den Vorwärts-Spülbefehl einen Strom zu unterbrechen, der über die Elektroden (108, 112) angelegt ist, und einen Druck in der Elektrolytkammer (104) zu erhöhen, so dass er mehr als 5 bar über einem Gasdruck innerhalb der ersten Gaskammer liegt.

10. Elektrolyseur (100) nach einem der Ansprüche 1 bis 9,
wobei die Elektrolytkammer (104) einen Elektrolytspalt umfasst, der sich zwischen den zwei Elektroden (108, 112) befindet, wobei der Spalt vorzugsweise eine Breite von 0,1 mm bis 10 mm aufweist.

11. Elektrolyseur (100) nach einem der Ansprüche 1 bis 10,
wobei die erste Gassammelkammer (106) einen ersten Ablassport (142) zum Ablassen von Elektrolytwasser umfasst, das durch die mindestens eine durchlässige Elektrode hindurch zurück in den Elektrolytversorgungskreis gelangt ist.

12. Elektrolyseur (100) nach Anspruch 11,
wobei die Steuereinheit (160) ausgelegt ist, um:
- einen Rückwärts-Spülbefehl zu empfangen;
- einen Strom zu unterbrechen, der über die Elektroden (108, 112) angelegt ist, und der ersten Gassammelkammer (106) über den ersten Ablassport (142) Elektrolytwasser zuzuführen, um die mindestens eine durchlässige Elektrode von der ersten Gassammelkammer (106) aus in Richtung der Elektrolytkammer (104) rückwärts zu spülen.

13. Verfahren zum Steuern eines Elektrolyseurs (100) zum Erzeugen von Wasserstoff aus Wasser, wobei der Elektrolyseur (100) zwei Elektroden (108, 112) zum Zersetzen von Elektrolytwasser umfasst, wobei mindestens eine der Elektroden (108, 112) für Gase, die durch die Zersetzung von Elektrolytwasser erzeugt werden, und Elektrolytwasser durchlässig ist, wobei das Verfahren Folgendes umfasst:
- Zuführen von Elektrolytwasser zu der mindestens einen Elektrode;
- Steuern eines Druckabfalls von mindestens 5 bar zwischen gegenüberliegenden Seiten der mindestens einen Elektrode.

14. Verfahren nach Anspruch 13, Folgendes umfassend:
- Anlegen von Strom über die Elektroden (108, 112), wenn der Druckabfall über gegenüberliegende Seiten der mindestens einen Elektrode höher ist als die auswählbare Druckschwelle.

## Revendications

1. Électrolyseur (100) destiné à générer de l'hydrogène, l'électrolyseur (100) comprenant :
- un boîtier (102) comprenant une chambre électrolytique (104) ;
- deux électrodes (108, 112) pour la décomposition d'eau électrolytique, au moins une des électrodes (108, 112) étant perméable aux gaz produits par la décomposition de l'eau électrolytique et à l'eau électrolytique à l'intérieur de la chambre électrolytique (104), l'au moins une électrode perméable ayant une première surface tournée vers la chambre électrolytique (104) et une deuxième surface tournée vers une première chambre de collecte de gaz (106) ;
- un circuit d'alimentation en électrolyte (130) pour alimenter en eau électrolytique la chambre électrolytique (104) ; et
- une unité de commande (160) conçue pour réguler une chute de pression d'au moins 5 bar à travers l'au moins une électrode perméable, entre la chambre électrolytique (104) et la première chambre de collecte de gaz (106).

2. Électrolyseur (100) de la revendication 1,
dans lequel l'unité de commande (160) est conçue pour :
- recevoir des données de pression de gaz représentatives d'une pression de gaz à l'intérieur de la première chambre de collecte ;
- déterminer, à partir des données de pression de gaz, une pression d'eau électrolytique souhaitée à l'intérieur de la chambre électrolytique (104) ;
- commander le circuit d'alimentation en électrolyte (130) pour régler la pression à l'intérieur de la chambre électrolytique (104) à la pression électrolytique souhaitée.

3. Électrolyseur (100) de la revendication 2,
dans lequel l'unité de commande (160) est conçue pour régler la pression électrolytique souhaitée de manière à ce qu'elle soit supérieure à une pression de gaz à l'intérieur de la première chambre de collecte de gaz (106), une différence entre la pression électrolytique et la pression de gaz étant supérieure à un premier seuil de pression sélectionnable.

4. Électrolyseur (100) de la revendication 3,
dans lequel l'unité de commande (160) est conçue pour appliquer un courant aux bornes des électrodes (108, 112) si la différence de pression entre la première chambre de collecte de gaz (106) et la chambre électrolytique (104) est supérieure au seuil de pression sélectionnable.

5. Électrolyseur (100) de l'une quelconque des revendications 1 à 4,
l'électrolyseur (100) comprenant une soupape de réglage de pression servant à réguler une pression de gaz à l'intérieur de la première chambre de collecte de gaz (106).

6. Électrolyseur (100) de l'une quelconque des revendications 2 à 5,
dans lequel le circuit d'alimentation en électrolyte (130) comprend une pompe hydraulique (134) pour l'alimentation en eau électrolytique de la chambre électrolytique (104), et dans lequel l'unité de commande (160) est conçue pour :
- recevoir des données de pression électrolytique représentatives d'une pression d'eau électrolytique à l'intérieur de la chambre électrolytique (104) ; et
- contrôler, sur la base des données de pression électrolytique, le fonctionnement de la pompe (134).

7. Électrolyseur (100) de l'une quelconque des revendications 1 à 6,
dans lequel les deux électrodes (108, 112) sont fabriquées à partir de matériaux différents.

8. Électrolyseur (100) de l'une quelconque des revendications 1 à 7,
dans lequel le circuit d'alimentation en électrolyte (130) comprend un réservoir de stockage de pression sélectivement raccordable à la chambre électrolytique (104), le réservoir de stockage de pression étant de préférence raccordé à la chambre électrolytique (104) par le biais d'une soupape de sortie normalement ouverte, qui est fermée pendant le fonctionnement normal de l'électrolyseur (100).

9. Électrolyseur (100) de l'une quelconque des revendications 1 à 8,
comprenant une unité de commande (160) conçue pour :
- recevoir une commande de rinçage vers l'avant ;
- interrompre tout courant appliqué aux bornes des électrodes (108, 112) et augmenter une pression dans la chambre électrolytique (104) de manière à ce qu'elle soit supérieure de plus de 5 bar à une pression de gaz à l'intérieur de la première chambre de gaz en réponse à la commande de rinçage vers l'avant.

10. Électrolyseur (100) de l'une quelconque des revendications 1 à 9,
dans laquelle la chambre électrolytique (104) comprend un espace électrolytique situé entre les deux électrodes (108, 112), l'espace ayant de préférence une largeur de 0,1 mm à 10 mm.

11. Électrolyseur (100) de l'une quelconque des revendications 1 à 10,
dans laquelle la première chambre de collecte de gaz (106) comprend un premier orifice de purge (142) servant à purger l'eau électrolytique qui a traversé l'au moins une électrode perméable pour la faire revenir dans le circuit d'alimentation en électrolyte.

12. Électrolyseur (100) de la revendication 11,
dans lequel l'unité de commande (160) est conçue pour :
- recevoir une commande de rinçage vers l'arrière ;
- interrompre tout courant appliqué aux bornes des électrodes (108, 112) et alimenter en eau électrolytique la première chambre de collecte de gaz (106) par le biais du premier orifice de purge (142) afin de rincer en circulation inverse l'au moins une électrode perméable depuis la première chambre de collecte de gaz (106) vers la chambre électrolytique (104).

13. Procédé de commande d'un électrolyseur (100) destiné à générer de l'hydrogène à partir d'eau, l'électrolyseur (100) comprenant deux électrodes (108, 112) pour la décomposition d'eau électrolytique, au moins une des électrodes (108, 112) étant perméable aux gaz produits par la décomposition de l'eau électrolytique et à l'eau électrolytique, le procédé comprenant :
- l'alimentation de l'au moins une électrode en eau électrolytique ;
- la régulation d'une chute de pression d'au moins 5 bar entre des côtés opposés de l'au moins une électrode.

14. Procédé de la revendication 13, comprenant :
- l'application d'électricité aux bornes des électrodes (108, 112) si la chute de pression entre des côtés opposés de l'au moins une électrode est supérieure au seuil de pression sélectionnable.
